# EUROPÄISCHE PATENTANMELDUNG

(11) **EP 3 291 425 A1**
(43) Veröffentlichungstag der Anmeldung: **07.03.2018**
(21) Anmeldenummer: 16187381.5
(22) Anmeldetag: 06.09.2016
(51) Int. Cl.: H02K 11/20, G01H 1/00

(54) **VERFAHREN ZUR ERMITTLUNG VON STRUKTURDYNAMISCHEN EIGENSCHAFTEN EINES STÄNDERWICKELKOPFES**

(71) Anmelder: Siemens Aktiengesellschaft, 80333 München (DE)
(72) Erfinder: Kowalski, Matthias, 45478 Mülheim an der Ruhr (DE); Steins, Hendrik, 45134 Essen (DE); Werkmeister, Stephan, 46286 Dorsten (DE)

(57) **Zusammenfassung**

Die Erfindung betrifft ein Verfahren zur Ermittlung von strukturdynamischen Eigenschaften eines Ständerwickelkopfes einer Ständerwicklung eines elektrischen Generators, wobei Wickelkopfschwingungen während eines Abfahrens des Generators bei geöffnetem Leistungsschalter ermittelt werden.

## Beschreibung

Die Erfindung betrifft ein Verfahren zur Ermittlung von strukturdynamischen Eigenschaften eines Ständerwickelkopfes einer Ständerwicklung einer elektrodynamischen Maschine, wobei innerhalb des Ständerwickelkopfes ein Rotor mit einer Rotorwicklung angeordnet wird, wobei die Ständerwicklung über einen Leistungsschalter mit einem Verbraucher verbunden wird.

Desweiteren betrifft die Erfindung eine Vorrichtung mit Messsensoren und einer Auswerteeinheit zur Ermittlung von strukturdynamischen Eigenschaften eines Ständerwickelkopfes einer Ständerwicklung einer elektrodynamischen Maschine.

Eine elektrodynamische Maschine, wie beispielsweise ein elektrischer Generator oder ein Motor, umfassen im Wesentlichen eine Ständerwicklung und einen um eine Rotationsachse drehbar gelagerten Rotor. Der drehbar gelagerte Rotor umfasst eine Rotorwicklung, durch die über eine Erregereinrichtung ein elektrischer Strom fließt. Dieser elektrische Strom führt zu einem magnetischen Feld, das in Folge einer Drehung des Rotors, die durch eine Antriebseinheit wie beispielsweise eine Dampf- oder Gasturbine erfolgt, zu einem wechselnden Magnetfeld in der Ständerwicklung, was zu einer Induktion einer elektrischen Spannung führt. Die somit erzeugte elektrische Energie wird über Leistungsschalter an ein elektrisches Verbrauchernetz geführt.

Solch ausgebildete elektrische Generatoren sind für einen Dauerbetrieb ausgelegt. Allerdings führen Temperatur-, Leistungs- und Belastungsänderungen zu unterschiedlichen Beanspruchungen. Diese Betriebsweisen ziehen Alterungsprozesse der Komponenten eines elektrischen Generators nach sich, die sich auf die Integrität der zugrundeliegenden Struktur auswirken. Eine Komponente die besonderen Belastungen untersteht ist der Ständerwickelkopf. Der Ständerwickelkopf ist ein detailliertes und komplexes Bauteil, das im Betrieb zu Schwingungen angeregt wird. Daher ist es erwünscht, Zustandsänderungen des Ständerwickelkopfes zu erfassen.

Eine bekannte Form der Zustandsänderung des Ständerwickelkopfes sind Schwingungen, die durch Blechpaketschwingen verursacht werden. Die Ursache der Blechpaketschwingungen sind radiale und tangentiale Komponenten der magnetischen Luftspaltflussdichte. Es ist üblich, im Zuge bestimmter Wartungsintervalle einen Generator zu öffnen und zu betreten und die strukturdynamischen Zustände der Ständerwickelköpfe sowohl auf der Schalt- als auch auf der Nicht-Schaltseite mithilfe einer experimentellen Modalanalyse zu untersuchen. Das Ziel solcher Tests ist es die Eigenformen und die damit verbundenen Eigenfrequenzen zu detektieren und diese Ergebnisse mit zeitlich vorherigen Messungen zu vergleichen, um Veränderungen wie beispielsweise Lockerungen der Struktur zu erkennen. Dieses Vorgehen erfordert einigen Aufwand und ist vergleichsweise kostenintensiv.

Die Erfindung möchte hier Abhilfe schaffen und es ist Aufgabe der Erfindung, ein Verfahren und eine Vorrichtung anzugeben, mit der strukturdynamische Eigenschaften eines Ständerwickelkopfes einer Ständerwicklung einfach und schnell ermittelt werden können.

Gelöst wird diese Aufgabe durch ein Verfahren zur Ermittlung von strukturmechanischen Eigenschaften eines Ständerwickelkopfes einer Ständerwicklung, wobei innerhalb des Ständerwickelkopfes ein Rotor mit einer Rotorwicklung angeordnet wird, wobei die Ständerwicklung über einen Leistungsschalter mit einem Verbraucher verbunden wird, wobei in einem ersten Schritt der Leistungsschalter geöffnet wird, wobei in einem zweiten Schritt die elektrische Stromstärke durch die Rotorwicklung auf einen definierten Wert eingestellt wird, wobei Messsensoren am Ständerwickelkopf angeordnet werden, die Schwingungen des Ständerwickelkopfes ermitteln und als Daten in einer Auswerteeinheit gespeichert werden, wobei die Auswerteeinheit derart ausgebildet wird, dass anhand der ermittelten Daten Informationen über strukturdynamische Eigenschaften ermittelt werden können.

Desweiteren wird die Aufgabe gelöst durch eine Vorrichtung mit Messsensoren und einer Auswerteeinheit, wobei mit den Messsensoren ermittelte Daten an die Auswerteeinheit übertragen und dort gespeichert werden.

Vorteilhafte Weiterbildungen sind in den Unteransprüchen angegeben.

Mit der Erfindung wird also vorgeschlagen, ein Online-Monitoring durchzuführen. Viele der heutigen sich im Betrieb befindlichen Turbogeneratoren sind mit Online-Monitoring-Messtechnik ausgestattet, um die sich im Betrieb ausprägenden Schwingungsniveaus der Wickelkopfstruktur zu messen. Erfindungsgemäß wird nun vorgeschlagen, solche bereits angeordneten Messsensoren in einem erfindungsgemäßen Verfahren zu nutzen, um Schwingungsniveaus, Schwingungsrichtungen und Phasenwinkel zu detektieren. Dabei werden Schwingungen detektiert und ausgewertet und mit vorherigen, gleichermaßen durchgeführten Messungen verglichen. Eine Auswertung kann ergeben, ob und inwiefern sich Änderungen im Schwingungsniveau eingestellt haben. Hieraus können Rückschlüsse auf den Alterungszustand gezogen werden, welche wiederum der Beurteilung der Notwendigkeit einer Instandsetzung zugrunde gelegt werden.

In einem ersten erfindungsgemäßen Verfahrensschritt wird der Generator vom elektrischen Verbundnetz geschaltet, indem der Leistungsschalter am Generator geöffnet wird. Der Generator befindet sich dann im elektrischen Leerlauf. Solch ein Betriebsfall zeichnet sich dadurch aus, dass das Statorblechpaket aufgrund der elektromagnetischen Zug- und Druckkräfte im Luftspalt die Wickelkopfstruktur zu einer definierten Schwingung anregt, dessen Amplitude in erster Näherung proportional zum Quadrat des Rotorstroms ist. Die Drehzahl des Generators befindet sich in diesem Fall noch bei Nenndrehzahl, die bei 50Hz bzw. 60Hz liegen kann. Bei einem zweipoligen elektrischen Turbogenerator entspricht dies einer definierten Schwingungsanregung der Wickelkopfstruktur von 100Hz bzw. 120Hz.

In einem zweiten erfindungsgemäßen Verfahrensschritt wird der Rotorstrom zunächst auf einen definierten Wert eingestellt, der eine definierte Schwingungsamplitude des Blechpakets erzwingt. Infolgedessen wird durch die mechanische Kopplung zwischen Blechpaket und Wickelkopf die Blechpaketschwingung den Wickelkopf zu einer harmonischen Schwingung zwingen, sowohl auf der Schaltseite als auch auf der Nicht-Schaltseite.

In einem weiteren erfindungsgemäßen Verfahrensschritt wird der Rotorstrom nun vorzugsweise konstant gehalten. Eine weitere Ausführungsform sieht vor, dass der Rotorstrom von dem definierten Startwert einer ebenfalls definierten Funktion in Abhängigkeit der Drehzahl folgt. Beispielsweise, dass der Rotorstrom proportional zum Reziprokwert der Drehzahl verläuft. Die Turbine kann auf Grund der trägen Masse und ggf. aufgrund schwacher, aber definierter Befeuerung Drehmoment liefern. Die Turbine kann auf Grund des geöffneten Leistungsschalters keine Wirkleistung an das Netz abgeben. Die Folge ist, dass der Wellenstrang abgebremst und die Rotationsgeschwindigkeit vorausberechenbar reduziert wird. Dadurch kommt es zu einem definierten Auslaufen. Strukturdynamisch kommt dieses definierte Auslaufen einer Frequenzfahrt gleich, bei der der Wickelkopf bei gleichbleibender Amplitude bzw. bei fest definiertem Amplitudenverlauf zu Schwingungen angeregt wird. Die somit ermittelten Daten werden für eine Auswertung benutzt. Die Auswertung der sich für verschiedene Anregungsfrequenzen einstellenden Schwingungen der Wickelkopfstruktur gibt nun Aufschluss über den aktuellen strukturmechanischen Zustand des Wickelkopfes und die damit einhergehenden Eigenformen und Eigenfrequenzen.

Für möglichst hohe und dementsprechend aussagekräftige Schwingungsamplituden sollten die Erregerströme möglichst hoch sein. Allerdings ist mit einem steigenden konstanten Erregerstrom das thermisch zulässige Frequenzband mit Hinblick auf die Mindestdrehzahl limitiert und muss individuell abgestimmt werden.

Ist ein breites Frequenzband gewünscht, bzw. hohe Amplituden während der Frequenzfahrt, kann beispielsweise auf die andere Ausführungsform einer Erregerstromreglung in Abhängigkeit der Drehzahl zurückgegriffen werden.

Das erfindungsgemäße Verfahren zeichnet sich somit durch die folgenden erfindungsgemäßen Verfahrensschritte aus:
In einem ersten Schritt wird der Leistungsschalter geöffnet, was zu einem elektrischen Leerlauf des Generators führt. In einem zweiten Schritt wird die Erregung auf einen definierten Wert eingestellt. In einem dritten Schritt führt das magnetische Luftspaltfeld zu einer Kraftwirkung auf das Statorblechpaket. In einem vierten Schritt regt das Statorblechpaket den Ständerwickelkopf zu einer Schwingung an. In einem fünften Schritt verringert sich die Generatordrehzahl aufgrund der Reibung kontinuierlich und, je nach Ausführungsform, auch der Erregerstrom als definierte Funktion der Drehzahl. In einem sechsten Schritt ändert sich die Frequenz der anregenden Schwingungen. In einem siebten Schritt werden die resultierenden Schwingungen des Wickelkopfes aufgezeichnet. In einem achten Schritt werden die Schwingungsamplituden des Wickelkopfes als Funktion der anregenden Frequenz ausgewertet, die schließlich Aufschluss über den Zustand des Wickelkopfes wie zum Beispiel Lage der Eigenformen bzw. Eigenfrequenzen Auskunft geben.

Da immer die gleichen Bedingungen bei der Abfahrt des Generators durch den definierten Rotorstrom bzw. das definierte Verhalten des Erregerstroms in Abhängigkeit der Drehzahl und der definierten Drehzahlfahrt die Möglichkeit eröffnen immer gleiche Randbedingungen zu erzeugen, ergibt dies den Vorteil, dass die Wickelkopfstruktur immer mit den gleichen Verfahren messtechnisch überprüft wird. Da sich außerdem der Generator näherungsweise auf Betriebstemperatur befindet, eröffnet dies die Möglichkeit, den gesamten Wickelkopf unter nahezu Realbedingungen (also in erwärmtem Zustand) zu untersuchen. Hingegen wird bei der konventionellen experimentellen Modalanalyse die Maschine nur in vollkommen abgekühlten Zustand untersucht.

## Patentansprüche

1. Verfahren zur Ermittlung von strukturdynamischen Eigenschaften eines Ständerwickelkopfes einer Ständerwicklung, wobei innerhalb des Ständerwickelkopfes ein Rotor mit einer Rotorwicklung angeordnet wird,
wobei die Ständerwicklung über einen Leistungsschalter mit einem Verbraucher verbunden wird,
wobei
in einem ersten Schritt der Leistungsschalter geöffnet wird,
wobei in einem zweiten Schritt die elektrische Stromstärke durch die Rotorwicklung auf einen definierten Wert eingestellt wird,
wobei Messsensoren am Ständerwickelkopf angeordnet werden, die Schwingungen des Ständerwickelkopfes ermitteln und als Daten in einer Auswerteeinheit gespeichert werden,
wobei die Auswerteeinheit derart ausgebildet wird, dass anhand der ermittelten Daten Informationen über strukturmechanische Eigenschaften ermittelt werden können.

2. Verfahren nach Anspruch 1,
wobei mit den Messsensoren Schwingungsamplituden, Schwingungsrichtungen oder Phasenwinkel ermittelt werden.

3. Verfahren nach Anspruch 1 oder 2,
wobei der Rotor mit einer Turbine, insbesondere Gas- und/oder Dampfturbine drehmomenttechnisch gekoppelt ist, wobei die Turbine keine Wirkleistung zur Verfügung stellt.

4. Verfahren nach einem der vorherigen Ansprüche,
wobei die elektrische Stromstärke durch die Rotorwicklung auf einen konstanten Wert eingestellt wird.

5. Verfahren nach einem der vorhergehenden Ansprüche,
wobei die mit den Messsensoren ermittelten Daten mit Referenzdaten verglichen werden,
wobei eine Störung vorliegt, falls ein definierter Wert zwischen den Daten und den Referenzdaten ermittelt wird.

6. Vorrichtung,
mit Messsensoren und einer Auswerteeinheit,
wobei mit den Messsensoren ermittelte Daten an die Auswerteeinheit übertragen und dort gespeichert werden,
wobei die Vorrichtung zur Durchführung des Verfahrens nach einem der Ansprüche 1 bis 5 ausgebildet ist.
